# EUROPÄISCHE PATENTSCHRIFT

(11) **EP 1 474 472 B1**
(45) Veröffentlichungstag und Bekanntmachung des Hinweises auf die Patenterteilung: **28.03.2007**
(21) Anmeldenummer: 03737272.9
(22) Anmeldetag: 24.01.2003
(51) Int. Cl.: C08K 5/101, C08L 69/00, C08L 67/02

(54) **VERWENDUNG VON ZUSAMMENSETZUNGEN ENTHALTEND POLYCARBONAT ODER POLYESTER ZUR COEXTRUSION**
USE OF COMPOSITIONS COMPRISING POLYCARBONATES OR POLYESTERS IN COEXTRUSION
UTILISATION DE COMPOSITIONS CONTENANT DU POLYCARBONATE OU POLYESTER POUR LA COEXTRUSION

(30) Priorität: 05.02.2002 DE 10204524
(43) Veröffentlichungstag der Anmeldung: 10.11.2004
(73) Patentinhaber: Bayer MaterialScience AG, 51368 Leverkusen (DE)
(72) Erfinder: GORNY, Rüdiger, Moon Twp., PA 15108 (US); ANDERS, Siegfried, 51147 Köln (DE); NISING, Wolfgang, 53757 St. Augustin (DE); EBERT, Wolfgang, 47800 Krefeld (DE)
(86) Internationale Anmeldenummer: PCT/EP2003/000759
(87) Internationale Veröffentlichungsnummer: WO 2003/066720

(56) Entgegenhaltungen:
- EP-A- 0 390 994
- US-A- 4 425 458
- US-A- 5 001 180
- US-A- 5 011 629
- US-B1- 6 306 962

## Beschreibung

Die vorliegende Erfindung betrifft Zusammensetzungen enthaltend ein Polymer ausgewählt aus der Gruppe bestehend aus Polycarbonat, einem transparenten Polycarbonat-Polyester Blend, einem Copolyestercarbonat und einem transparenten Polyester und Ester aus verzweigten Alkoholen und Carbonsäuren, wobei die Carbonsäuren ihrerseits veresterte OH-Funktionen tragen, sowie aus diesen Zusammensetzungen hergestellte Erzeugnisse, insbesondere Platten.

Zusammensetzungen, die Polycarbonat enthalten, werden in vielen Bereichen eingesetzt. Insbesondere werden Platten aus Zusammensetzungen, die Polycarbonat enthalten beispielsweise für Bedachungen oder Verscheibungen verwendet. Die Zusammensetzungen, die Polycarbonat enthalten, enthalten üblicherweise zusätzliche Stoffe wie z.B. Gleitmittel (auch Entformungsmittel genannt). Als Gleitmittel werden beispielsweise Carbonsäureester verwendet.

Zusammensetzungen die Polycarbonat und Guerbet-Alkohole enthalten, sind bekannt. Guerbet-Alkohole sind die Produkte der Guerbet-Reaktion und können beispielsweise durch die Guerbet-Reaktion hergestellt werden. Als Guerbet-Reaktion wird die Selbstkondensation von Alkoholen unter dem Einfluss von Natrium oder Kupfer bei ca. 200°C und erhöhtem Druck bezeichnet.

Polycarbonatplatten sind beispielsweise aus EP A 0 110 221 bekannt und werden für eine Vielzahl von Anwendungszwecken bereitgestellt. Die Herstellung der Platten erfolgt beispielsweise durch Extrusion von Zusammensetzungen, die Polycarbonat enthalten. Gegebenenfalls kann eine Coextrusion mit weiteren Zusammensetzungen, die Polycarbonat enthalten und die zusätzlich einen erhöhten Anteil an UV-Absorbem enthalten erfolgen.

Ein bei der Extrusion solcher Platten immer wieder auftretendes Problem ist das Absetzen flüchtiger Bestandteile aus der Zusammensetzung am Kalibrator (bei Stegplatten) oder auf den Walzen (bei Massivplatten), die zu Oberflächenstörungen auf den Platten führen können. Flüchtige Bestandteile sind beispielsweise UV-Absorber, Entformungsmittel und andere niedermolekulare Bestandteile der Zusammensetzung.

EP A 0 320 632 beschreibt coextrudierte Platten aus Zusammensetzungen, die Polycarbonat enthalten, die einen UV-Absorber enthalten und ein Gleitmittel enthalten können. Nachteilig ist, dass bei längerer Extrusionsdauer die Oberfläche der Platten durch Ausdampfungen aus der Schmelze der Zusammensetzung, besonders bei der Coextrusion, nachteilig beeinflusst wird.

Das vermehrte Ausdampfen des UV-Absorbers aus der Schmelze der Zusammensetzung führt zur Belagsbildung am Kalibrator oder den Walzen und schließlich zur Bildung von Störungen der Plattenoberfläche (z.B. weiße Flecken, Welligkeit usw.). Am Kalibrator führt außerdem der Polycarbonatabrieb zu pulverigen Ablagerungen auf den Polycarbonatplatten.

Auch Ester von Guerbetalkoholen in Polycarbonaten sind bekannt, so beschreibt EP-A 0 390 994 Zusammensetzungen, die Polycarbonat enthalten, und die zusätzlich spezielle Fettsäureester von Guerbetalkoholen als Entformungsmittel enthalten.

In EP-A 0 390 994 wird keine Verwendung der Formmassen für die Coextrusion genannt. Außerdem wird nicht erwähnt, daß die erfindungsgemäßen Entformungsmittel sich für Anwendungen in der Coextrusion zusammen mit höhere Mengen UV-Absorbem eignen.

WO 01/62851 und WO 01/25334 beschreiben in den Bespielen die Verwendung von Lubril JK, das eine der Ausführungsformen von EP-A 0 390 994 darstellt, in speziellen Polycarbonat-ABS Blends. Auch hier wird die Coextrusion nicht erwähnt.

WO 01/74935 lehrt, dass Mischungen der Ester aus Fettsaeuren und Guerbetalkoholen und Fettsaeuren und linearen Alkoholen das Verfahren zur Herstellung von Kunststoffplatten durch Coxtrusion verbessern können, insbesondere wenn das Verfahren über einen langen Zeitraum durchgeführt wird (Verbesserung des Langzeitcoextrusionsverhaltens).

Der vorliegenden Erfindung liegt somit die Aufgabe zugrunde, Zusammensetzungen, die Polycarbonat enthalten, bereitzustellen, die bei der Herstellung von Platten durch coextrusion dieser Zusammensetzungen die Nachteile des Standes der Technik nicht aufweisen.

Die erfindungsgemäße Aufgabe wird gelöst durch Zusammensetzung enthaltend ein Polymer ausgewählt aus der Gruppe bestehend aus Polycarbonat, einem transparenten Polycarbonat-Polyester Blend, einem Copolyestercarbonat und einem transparenten Polyester und eine Verbindung der Formel (I) 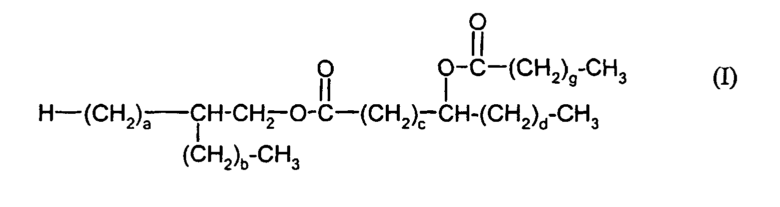 und eine oder mehrere verschiedene Verbindungen (bevorzugt ist ein Gemisch homologer Verbindungen) der Formel (II) 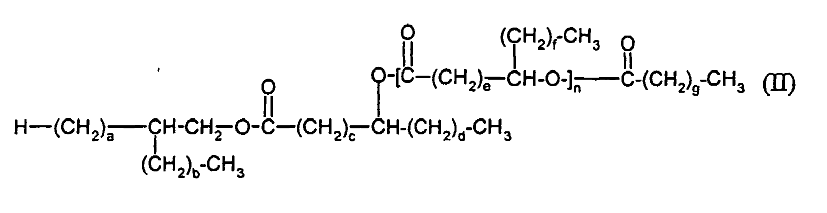 wobei sich im bevorzugten Fall die homologen Verbindungen der Formel (II) durch verschiedene Werte von n auszeichnen und
wobei für die Verbindungen nach Formel (I) und für die Verbindungen nach Formel (II) gilt:
a = 1 bis 17,
b = 0 bis 16,
c = 6 bis 14,
d = 3 bis 7,
e = 6 bis 14,
f = 3 bis 7,
g = 5 bis 40 und
a+b = ≥9
und wobei für die Verbindungen nach Formel (II) gilt n = 1 bis 10 und wobei bevorzugt gilt, dass das Verhältnis des Gewichtsanteiles der Verbindung gemäß Formel (I) in der Zusammensetzung zu dem Gewichtsteil aller Verbindungen gemäß Formel (II) in der Zusammensetzung 1:0,001 bis 1:1,2 ist.

Der Gewichtsanteil der Verbindungen nach Formel (I) und der Verbindungen nach Formel (II) ist in Summe (I und II) bevorzugt 0,02 bis 1,0, besonders bevorzugt 0,1 bis 0,5 Gew.-%.

Für die Verbindungen der allgemeinen Formel I und der allgemeinen Formel II gilt bevorzugt:
a = 2 bis 14,
b = 3 bis 14,
c = 10,
d = 5,
e = 10,
f = 5,
g = 14 bis 16,
n = 1 bis 7,
a + b = 9 bis 25.

Das Verhältnis des Gewichtsanteiles der Verbindung gemäß Formel I in der erfindungsgemäßen Zusammensetzung zu dem Gewichtsanteil aller Verbindungen gemäß Formel II in der erfindungsgemäßen Zusammensetzung ist 1 : 0,001 bis 1 : 1,2, bevorzugt 1 : 0,005 bis 1 : 1.

In einer besonderen Ausführungsform der vorliegenden Erfindung ist das Polymer, das ausgewählt ist aus der Gruppe bestehend aus Polycarbonat, einem transparenten Polycarbonat-Polyester Blend, einem Copolyestercarbonat und einem transparenten Polyester, Polycarbonat.

In einer besonderen Ausführungsform der vorliegenden Erfindung ist das Polymer, das ausgewählt ist aus der Gruppe bestehend aus Polycarbonat, einem transparenten Polycarbonat-Polyester Blend, einem Copolyestercarbonat und einem transparenten Polyester, ein transparenter Polyester. Dieser transparente Polyester ist erhältlich aus Disäuren und Diolen. Die Disäuren sind mindestens eine oder mehrere Disäuren ausgewählt aus der Gruppe bestehend aus Terephthalsäure, Isophthalsäure und Cyclohexan-1,4-dicarbonsäure. Die Diole sind mindestens eines oder mehrere Diole ausgewählt aus der Gruppe bestehend aus Ethylenglycol, Butan-1,4-diol, Cyclohexan-1.4-dimethanol, Diethylenglycol und Neopentylglycol.

Bevorzugt sind die folgenden transparenten Polyester:
a) 90 bis 100 mol-% Terephthalsäure
   0 bis 10 mol-% Isophthalsäure
   60 bis 70 mol-% Ethylenglycol
   30 bis 40 mol-% Cyclohexandimethanol
   0 bis 5 mol-% Diethylenglycol
b) 90 bis 100 mol-% Terephthalsäure
   0 bis 10 mol-% Isophthalsäure
   60 bis 70 mol-% Cyclohexandimethanol
   30 bis 40 mol-% Ethylenglycol
   0 bis 5 mol-% Diethylenglycol
c) 95 bis 100 mol-% Cyclohexandicarbonsäure
   0 bis 5 mol-% andere aliphatische Dicarbonsaeuren
   95 bis 100 mol-% Cyclohexandimethanol
   0 bis 5 mol-% andere aliphatische Diole

Eine bevorzugte Ausführungsform der vorliegenden Erfindung ist gegeben durch die genannten erfindungsgemäßen Zusammensetzungen, wobei der Gewichtsteil der Verbindung gemäß Formel (II) mit n = 1 0,5 bis 1,2 mal so groß ist wie der Gewichtsteil der Verbindung gemäß Formel (I) und der Gewichtsteil der Verbindung gemäß Formel (II) mit n = 2 0,2 bis 1,2 mal so groß ist wie der Gewichtsteil der Verbindung gemäß Formel (I) und der Gewichtsteil der Verbindung gemäß Formel (II) mit n = 3 0 bis 1 mal so groß ist wie der Gewichtsteil der Verbindung gemäß Formel (I) und der Gewichtsteil der Verbindung gemäß Formel (II) mit n = 4 0 bis 0,8 mal so groß ist wie der Gewichtsteil der Verbindung gemäß Formel (I) und der Gewichtsteil der Verbindung gemäß Formel (II) mit n = 5 0 bis 0,5 mal so groß ist wie der Gewichtsteil der Verbindung gemäß Formel (I) und der Gewichtsteil der Verbindung nach Formel (II) mit n = 6 0 bis 0,4 mal so groß ist wie der Gewichtsteil der Verbindung nach Formel (I).

Weiterhin ist eine bevorzugte Ausführungsforin der vorliegenden Erfindung gegeben durch die erfindungsgemäßen Zusammensetzungen, wobei die Zusammensetzungen zusätzlich 0,1 bis 15 Gew.-Teile UV-Absorber enthalten. Der UV-Absorber ist dabei bevorzugt ausgewählt aus der Gruppe bestehend aus (Bis[2-hydroxy-5-tert.-octyl-3-(benzotriazol-2-yl)phenyl]methan), 2-(4,6-Diphenyl-1,3,5-triazin-2-yl)-5-(hexyl)oxy-Phenol, 2-Cyano-3,3-diphenyl-propensäure-2,2-bis[(2-cyano-1-oxo-3,3-diphenyl-2-propenyl)oxy]methyl-1,3-propanediylester.

Weiterhin ist eine bevorzugte Ausführungsform der vorliegenden Erfindung eine erfindungsgemäße Zusammensetzung, wobei die Zusammensetzung zusätzlich 10 bis 3.000 ppm, bezogen auf die Gesamtmasse der Zusammensetzung Thermostabilisatoren enthält. Die Thermostabilisatoren sind dabei bevorzugt ausgewählt aus der Gruppe bestehend aus Tris-(2,4-di-tert.-butylphenyl)phosphat, Triphenylphospin und 3,9-bis[2,4-bis(1-methyl-1-phenylethyl)phenoxy]-2,4,8,10-tetraoxa-3,9-diphosphaspiro-[5.5]undecane und 5-butyl-5-ethyl-2-[2,4,6-tris(1,1-dimethylethyl)phenoxy]-1,3,2-dioxaphosphorinane.

Die erfindungsgemäße Aufgabe wird weiterhin gelöst durch die Verwendung der erfindungsgemäßen Zusammensetzungen zur Herstellung beliebiger Erzeugnisse. Die Herstellung erfolgt dabei durch coextrusion.

Weiterhin wird die erfindungsgemäße Aufgabe gelöst durch Erzeugnisse enthaltend die erfindungsgemäßen Zusammensetzungen. In einer bevorzugten Ausftihrungsform sind diese Erzeugnisse einschichtige oder mehrschichtige Platten, wobei eine oder mehrere der Schichten der Platten eine erfindungsgemäße Zusammensetzung enthält.

Bevorzugt sind mehrschichtige Platten aus mindestens drei Schichten, wobei eine oder beide der äußeren Schichten der mehrschichtigen Platten eine erfindungsgemäße Zusammensetzung enthält.

Die erfindungsgemäßen Zusammensetzungen enthalten bevorzugt zusätzlich 0,1 bis 15 Gew.-Teile, besonders bevorzugt 1 bis 15 Gew.-Teile, ganz besonders bevorzugt 3 bis 8 Gew.-Teile UV-Absorber.

Das erfindungsgemäß bevorzugte Polycarbonat ist Bisphenol-A-homopolycarbonat.

Die erfindungsgemäßen Zusammensetzungen können weitere übliche Verarbeitungshilfsmittel, insbesondere weitere Entformungsmittel und Fließmittel enthalten.

Die erfindungsgemäßen Zusammensetzungen können übliche Stabilisatoren für Polycarbonate, insbesondere übliche Thermostabilisatoren enthalten.

Die Bestimmung der relativen Gewichtsanteile der Verbindungen gemäß Formel I und Formel II kann beispielsweise durch HPLC erfolgen.

Verbindungen der allgemeinen Formel (I) 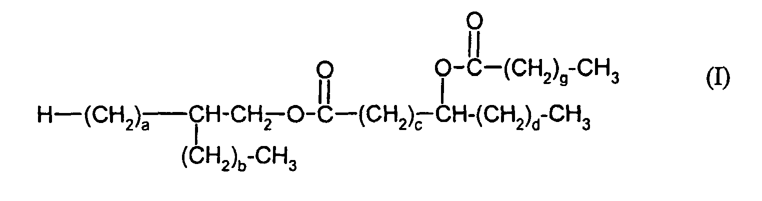 und Verbindungen der allgemeinen Formel (II) 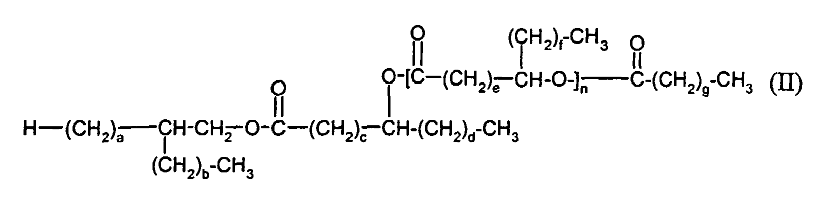 sind kommerziell erhältlich. Sie werden üblicherweise in Kosmetika eingesetzt. Sie können beispielsweise unter dem Handelsnamen Lubril JK von der Firma Rhodia (Rhodia GmbH, Städelstraße 10, D-60596 Frankfurt) bezogen werden.

Die Verbindungen der Formel (I) und die Verbindungen der Formel (II) können durch bekannte Verfahren hergestellt werden. Beispielsweise können sie hergestellt werden wie in EP A 0 390 994 beschrieben.

Additive der Formel (I) sind kommerziell erhältlich, z.B. Lubril JK der Firma Rhodia, und werden normalerweise für Kosmetika verwendet. Sie liegen dabei typischerweise im Gemisch mit Verbindungen der Formel (II) vor.

Die erfindungsgemäßen Zusammensetzungen haben sich als besonders vorteilhaft erwiesen. Sie lassen sich problemlos verarbeiten und zeigen in den als Produkt erhaltenen Erzeugnisse keine Beeinträchtigungen. Überraschenderweise hat sich herausgestellt, dass beim Einsatz dieser Verbindungen auch als flüchtig bekannte Zusatzstoffe von Zusammensetzungen, die Polycarbonat enthalten, nicht mehr zu den anfangs beschriebenen Problemen führen.

Thermoplastische, aromatische Polycarbonate für die erfindungsgemäßen Zusammensetzungen sind Homopolycarbonate, Copolycarbonate und thermoplastische Polyestercarbonate. Sie haben bevorzugt mittlere Molekulargewichte M̅_{w} von 18.000 bis 40.000 g/mol, vorzugsweise von 26.000 bis 36.000 g/mol und insbesondere von 28.000 bis 35.000 g/mol, ermittelt durch Messung der rel. Lösungsviskosität in Dichlormethan oder in Mischungen gleicher Gewichtsmengen Phenol/o-Dichlorbenzol geeicht durch Lichtstreuung.

Wobei die Schmelzeviskosität der Zusammensetzungen vorzugsweise kleiner sein sollte als die des Substrates, auf die sie aufgebracht werden, wenn mehrschichtige Erzeugnisse hergestellt werden.

Zur Herstellung von Polycarbonaten für die erfindungsgemäßen Zusammensetzungen sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)-carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird beispielhaft an dem Phasengrenzflächenverfahren beschrieben.

Als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'-Bis(hydroxyphenyl)-diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl)-diphenol (Bisphenol M), 4,4-(para-Phenylendiisopropyl)diphenol, 1,1-Bis-(4-hydroxyphenyl)-3,3,5-trimethylcyclohexan (BP-TMC) sowie gegebenenfalls deren Gemische. Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol. Vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden die in DE-A 42 38 123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Es können Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol , Cumylphenol oder deren Mischungen verwendet in Mengen von 1-20 Mol-%, bevorzugt 2-10 Mol-%, je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Die erfindungsgemäßen Zusammensetzungen werden auch als Coextrusionsmassen bezeichnet.

Die Herstellung der Polycarbonate für die erfindungsgemäßen Coextrusionsmassen nach dem Schmelzeumesterungsprozess ist in DE-A 42 38 123 beispielhaft beschrieben.

Die erfindungsgemäßen Zusammensetzungen können auch UV-Absorber enthalten.

Geeignete UV-Absorber für die erfindungsgemäßen Coextrusionsmassen sind bevorzugt solche Verbindungen, die aufgrund ihres Absorptionsvermögens unterhalb 400 nm in der Lage sind, Polycarbonat wirksam vor UV-Licht zu schützen und ein Molekulargewicht von mehr als 370, vorzugsweise von 500 und mehr aufweisen.

Beispiele für UV-Absorber, die erfindungsgemäß verwendet werden können, werden im folgenden beschrieben.
a) Dimere Benzotriazol-Derivate nach Formel (II): 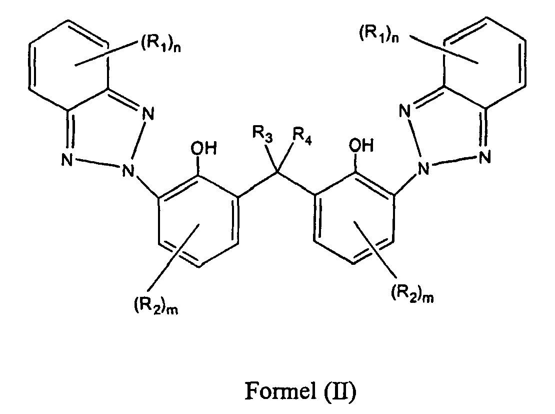 In Formel (II) sind R¹ und R² gleich oder verschieden und bedeuten H, Halogen, C₁-C₁₀-Alkyl, C₅-C₁₀-Cycloalkyl, C₇-C₁₃-Aralkyl, C₆-C₁₄-Aryl, -OR⁵ oder -(CO)-O-R⁵ mit R⁵ = H oder C₁-C₄-Alkyl.
   In Formel (II) sind R³ und R⁴ ebenfalls gleich oder verschieden und bedeuten H, C₁-C₄-Alkyl, C₅-C₆-Cycloalkyl, Benzyl oder C₆-C₁₄-Aryl.
   In Formel (II) bedeutet m 1,2 oder 3 und n 1,2,3 oder 4.
   Bevorzugt ist dabei Tinuvin 360 mit R¹ = R³ = R⁴ = H; n = 4; R² = 1,1,3,3-Tetramethylbutyl; m = 1
   Vorzugsbereiche: 0.00001 - 1.5 Gew-% und 2-20 Gew-%, besonders bevorzugt 0.01 - 1.0 Gew-% und 3-10 Gew-%, ganz besonders bevorzugt 0.1 - 0.5 Gew-% und 4-8 Gew-%
a2) Dimere Benzotriazol-Derivate nach Formel (III): 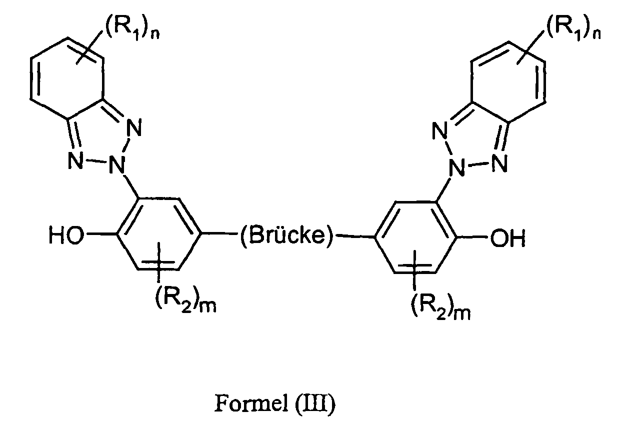 worin die Brücke 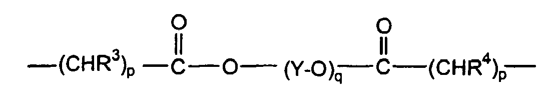 bedeutet, R₁, R₂, m und n die für Formel (II) genannte Bedeutung haben, und worin p eine ganze Zahl von 0 bis 3 ist, q eine ganze Zahl von 1 bis 10 ist,
   Y gleich -CH₂-CH₂-, -(CH₂)₃-, -(CH₂)₄-, -(CH₂)₅-, -(CH₂)₆-, oder CH(CH₃)-CH₂- ist und R³ und R⁴ die für Formel (II) genannte Bedeutung haben.
   Bevorzugt ist dabei Tinuvin 840 mit R1 = H; n = 4; R² = tert-Butyl; m = 1; R² ist in ortho-Stellung zur OH-Gruppe angebracht; R³ = R⁴ = H; p = 2; Y = -(CH₂)₅-; q = 1
   Vorzugsbereiche: 0.00001 - 1.5 Gew-% und 2-20 Gew-%, besonders bevorzugt 0.01 - 1.0 Gew-% und 3-10 Gew-%, ganz besonders bevorzugt 0.1- 0.5 Gew-% und 4-8 Gew-% 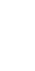
b) Triazin-Derivate nach Formel (IV): 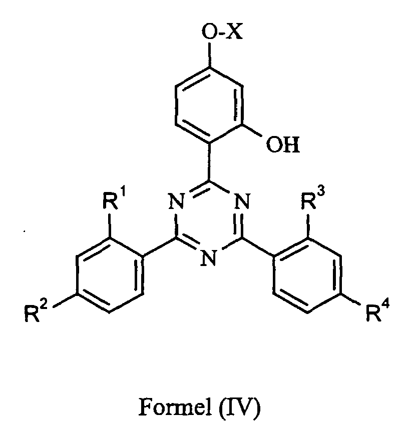 worin R1, R2, R3, R4 in Formel (IV) gleich oder verschieden sind und H oder Alkyl oder CN oder Halogen oder O-Alkyl sind und X gleich Alkyl ist.
   Bevorzugt ist dabei Tinuvin 1577 mit R¹ = R² = R³ = R⁴ = H; X = Hexyl Cyasorb UV-1164 mit R¹ = R² = R³ = R⁴ = Methyl; X = Octyl
   Vorzugsbereiche: 0.00001 - 1.0 Gew-% und 1.5-10 Gew-%, besonders bevorzugt 0.01 - 0.8 Gew-% und 2-8 Gew-%, ganz besonders bevorzugt 0.1 - 0.5 Gew-% und 3-7 Gew-%
c) Triazin-Derivate der folgenden Formel (IVa) 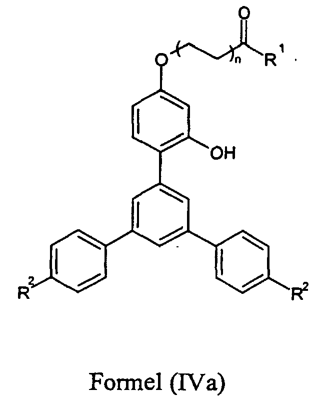 worin
   R¹ gleich C₁-Alkyl bis C₁₇-Alkyl bedeutet,
   R² gleich H oder C₁-Alkyl bis.C₄-Alkyl bedeutet und
   n gleich 0 bis 20 ist.
   Vorzugsbereiche: 0.00001 - 1.0 Gew-% und 1.5-10 Gew-%, besonders bevorzugt 0.01 - 0.8 Gew-% und 2-8 Gew-%, ganz besonders bevorzugt 0.1 - 0.5 Gew-% und 3-7 Gew-%
d) Diarylcyanoacrylate der Formel (V): 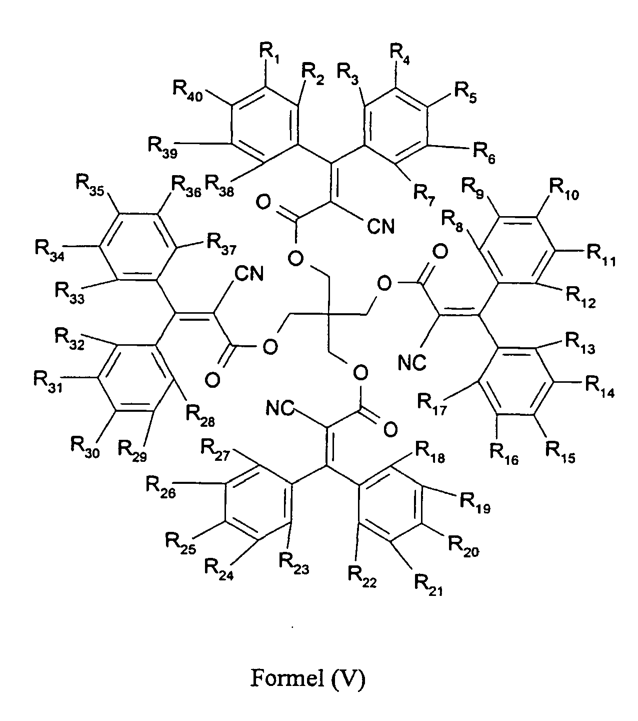 worin R₁ bis R₄₀ gleich oder verschieden sein können und H, Alkyl, CN oder Halogen bedeuten.
   Bevorzugt ist dabei Uvinul 3030 mit R₁ bis R₄₀ = H
   Vorzugsbereiche: 0.00001 - 1.5 Gew-% und 2-20 Gew-%, besonders bevorzugt 0.01 - 1.0 Gew-% und 3-10 Gew-%, ganz besonders bevorzugt 0.1 - 0.5 Gew-% und 4-8 Gew-%
e) Geeignet sind auch die in Anspruch 1 von US-A 5 959 012 genannten UV-Absorber.

Die Einarbeitung der UV-Absorber in die zu verwendenden, erfindungsgemäßen Zusammensetzungen der Platten erfolgt nach üblichen Methoden, beispielsweise durch Vermischen von Lösungen der UV-Absorber mit Lösungen der Kunststoffe in geeigneten organischen Lösungsmitteln wie CH₂Cl₂, Halogenalkanen, Halogenaromaten, Chlorbenzol und Xylolen. Die Substanzgemische werden dann in bekannter Weise via Extrusion homogenisiert; die Lösungsgemische werden in bekannter Weise durch Ausdampfen des Lösungsmittels und anschließender Extrusion entfernt, beispielsweise compoundiert.

Geeignete Stabilisatoren für die Polycarbonate für die erfindungsgemäßen Zusammensetzungen sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosphonit und Triarylphosphit genannt. Besonders bevorzugt sind Triphenylphosphin und Tris-(2,4-di-tert.-butylphenyl)phosphit.

Beispiele für Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Alle für die Synthese der erfindungsgemäßen Zusammensetzungen verwandten Einsatzstoffe und Lösungsmittel können aus ihrer Herstellung und Lagerung mit entsprechenden Verunreinigungen kontaminiert sein, wobei es das Ziel ist, mit so sauberen Ausgangsstoffen wie möglich zu arbeiten.

Das Vermischen der einzelnen Bestandteile kann in bekannter Weise sowohl sukzessive als auch simultan erfolgen und zwar sowohl bei Raumtemperatur als auch bei erhöhter Temperatur.

Die Einarbeitung der Zusätze in die erfindungsgemäßen Zusammensetzungen erfolgt bevorzugt in bekannter Weise durch Vermischen von Polymergranulat mit den Zusätzen bei Temperaturen von etwa 200 bis 380°C in üblichen Aggregaten wie Innenknetern, Einschneckenextrudern und Doppelwellenextrudern beispielsweise durch Schmelzecompoundierung oder Schmelzeextrusion oder durch Vermischen der Lösungen des Polymers mit Lösungen der Additive und anschließende Verdampfung der Lösungsmittel in bekannter Weise. Der Anteil der Additive in der Zusammensetzung kann in weiten Grenzen variiert werden und richtet sich nach den gewünschten Eigenschaften der Formmasse. Der Gesamtanteil der Additive in der Zusammensetzung beträgt etwa bis zu 20 Gew.-%, vorzugsweise 0,2 bis 12 Gew.-%, bezogen auf das Gewicht der Zusammensetzungen.

Wie die erfindungsgemäßen Beispiele belegen, bietet die Verwendung der erfindungsgemäßen Zusammensetzung einen signifikanten Vorteil auf beliebigen Polycarbonat-Formmassen als Basismaterial. Insbesondere jedoch dann, wenn auch das Plattenbasismaterial mit dem Entformungsmittel der erfindungsgemäßen Zusammensetzung ausgerüstet ist.

Gegenstand der Erfindung sind daher ferner Formkörper, die unter Mitverwendung der erfindungsgemäßen Zusammensetzungen hergestellt worden sind. Die Zusammensetzungen können zur Erzeugung von massiven Kunststoffplatten und sogenannten Stegplatten (z.B. Stegdoppelplatten) eingesetzt werden. Die Platten umfassen also auch solche, die auf einer Seite oder beiden Seiten eine zusätzliche Deckschicht mit der erfindungsgemäßen Zusammensetzung mit einem erhöhten UV-Absorbergehalt aufweisen.

Die erfindungsgemäßen Zusammensetzungen erlauben die erleichterte Herstellung von Erzeugnissen, insbesondere von Platten und aus ihnen hergestellte Erzeugnisse wie z.B. Verscheibungen für Gewächshäuser, Wintergärten, Bushaltestellen, Reklametafeln, Schilder, Schutzscheiben, Automobilverscheibungen, Fenster und Überdachungen.

Nachträgliche Bearbeitungen der mit der erfindungsgemäßen Zusammensetzung beschichteten Erzeugnisse, wie z.B. Tiefziehen oder Oberflächenbearbeitungen, wie z.B. Ausrüstung mit Kratzfestlacken, wasserspreitenden Schichten und ähnliches sind möglich und die durch diese Verfahren hergestellten Erzeugnisse ebenfalls Gegenstand des Patentes.

Die Coextrusion als solche ist literaturbekannt (siehe beispielsweise EP-A 0 110 221 und EP-A 0 110 238). Im vorliegenden Fall wird vorzugsweise wie folgt verfahren:

An einem Coextrusionsadapter sind Extruder zur Erzeugung der Kernschicht und Deckschicht(en) angeschlossen. Der Adapter ist so konstruiert, dass die die Deckschicht(en) formende Schmelze als dünne Schicht haftend auf die Schmelze der Kernschicht aufgebracht werden.

Der so erzeugte, mehrschichtige Schmelzestrang wird dann in der anschließend angeschlossenen Düse in die gewünschte Form (Steg- oder Massivplatte) gebracht. Anschließend wird in bekannter Weise mittels Kalandrierung (Massivplatte) oder Vakuumkalibrierung (Stegplatte) die Schmelze unter kontrollierten Bedingungen abgekühlt und anschließend abgelängt. Gegebenenfalls kann nach der Kalibrierung ein Temperofen zur Eliminierung von Spannungen angebracht werden. Anstelle des vor der Düse angebrachten Adapters kann auch die Düse selbst so ausgelegt sein, dass dort die Zusammenführung der Schmelzen erfolgt.

Die Erfindung wird durch das folgende Beispiel weiter erläutert.

### Beispiel

10 mm Stegdoppelplatten A, B, und C, wie sie beispielweise in der EP-A 0 110 238 beschrieben sind, wurden aus folgenden Zusammensetzungen erhalten: Als Basismaterial wurde Makrolon^{®} 1243 (verzweigtes Bisphenol-A Polycarbonat der Bayer AG, Leverkusen mit einem Schmelzflussindex (MFR) gemäß ISO 1133 von 6,5 g/10 min bei 300°C und 1,2 kg Belastung) verwendet. Coextrudiert wurde dieses mit den in der Tabelle angegebenen Compounds auf Basis Malaolon^{®} 3100 (lineares Bisphenol-A Polycarbonat der Bayer AG, Leverkusen mit einem Schmelzflussindex (MFR) gemäß ISO 1133 von 6,5 g/10 min bei 300°C und 1,2 kg Belastung).

Die Dicke der Coex-Schicht beträgt jeweils etwa 50 µm.

| **Platte** | **UV-Absorber** | **Entformungsmittel** | **Weitere Additive** |
|---|---|---|---|
| **A** | 5% Tinuvin360 | 0.2% 2-Octyldodecyl-12-stearoyl-stearat ^{*)} | - |
| **B** | 5% Tinuvin360 | 0.25% PETS^{***)} | - |
| **C** | 5% Tinuvin360 | 0,3% gemäß Erfindung^{**)} | - |
| **D** | 5% Tinuvin360 | 0,2% gemäß Erfindung^{**)} | - |
| **E** | 5% Tinuvin360 | 0,3% gemäß Erfindung^{**)} | 0.04% Irgafos 168^{****)} |
| **F** | 3.5% Tinuvin1577 | 0,2% gemäß Erfindung^{**)} | - |
| **G** | 5% Uvinul3030 | 0,2% gemäß Erfindung^{**)} | - |
| **H** | 5% Tinuvin360 | 0.2%^{*****)} | - |

| | | | |
|---|---|---|---|
| *) 100 % gemäss Formel (I) mit: a=6, b=7, c=10, d=5, g=16, kein Produkt gemäss Formel (II) mit n>0, im Handel erhältlich, Ceraphyl^{®} 847 der Firma ISP, 1361 Alps Road, Wayne, NY 07470, USA **) Im Handel erhältlich, Lubril^{®} JK der Fa. Rhodia GmbH, Städelstraße 10, 60569 Frankfurt, Deutschland) ***) Im Handel erhältlich, Loxiol^{®} VPG 861 der Fa. Cognis, Düsseldorf, Deutschland (PETS = Pentaerythrittetrastearat) ****) Tris-(2,4-di-tert.-butylphenyl)phosphat, im Handel erhältlich von der Fa. Ciba Spezialitätenchemie, Lampertheim, Deutschland *****) gemäss Formel (I) mit: a=6, b=7, c=10, d=5, g=16, gemaess Formel (II): a=6, b=7, c=10, d=5, g=16, e=10, f=5, n=1, Verhaeltnis (Formel I) zu (Formel II) = 1 : 1.4; hergestellt nach der in EP-A 0 390 994 angegebenen Vorschrift | | | |

Die verwendeten Maschinen und Apparate zur Herstellung von mehrschichtigen Stegplatten werden im folgenden beschrieben:

Die Einrichtung bestand aus
- dem Hauptextruder mit einer Schnecke der Länge 33 D und einem Durchmesser von 70 mm mit Entgasung
- dem Coexadapter (Feedblocksystem)
- einem Coextruder zum Aufbringen der Deckschicht mit einer Schnecke der Länge 25 D und einem Durchmesser von 30 mm
- der speziellen Breitschlitzdüse mit 350 mm Breite
- dem Kalibrator
- der Rollenbahn
- der Abzugseinrichtung
- der Ablängvorrichtung (Säge)
- dem Ablagetisch.

Das Polycarbonat-Granulat des Basismaterials wurde dem Fülltrichter des Hauptextruders zugeführt, das UV-Coextrusionsmaterial dem des Coextruders. Im jeweiligen Plastifiziersystem Zylinder/Schnecke erfolgte das Aufschmelzen und Fördern des jeweiligen Materials. Beide Materialschmelzen wurden im Coexadapter zusammengeführt und bilden nach Verlassen der Düse und Abkühlen im Kalibrator einen Verbund. Die weiteren Einrichtungen dienten dem Transport, Ablängen und Ablegen der extrudierten Platten.

### Coextrusion mit A (Referenz):

- erste kleinere Ablagerungen nach 4 h
- nach 90 Minuten in unregelmäßigen Abständen auftretende, leichte Querwellen, die die Plattenqualität leicht negativ beeinträchtigen. Nach 4 ½ Stunden etwas stärkere Querwellen.
- Note: gut

### Coextrusion mit B (Referenz):

- erste kleinere Störungen nach 50 Minuten (Querwellen)
- nach 90 Minuten größere Störungen (Verwerfungen von Stegen, weiße Ablagerungen, Querwellen)
- Note: schlecht

### Coextrusion mit C:

- keine Ablagerungen über eine Versuchsdauer von 5 Stunden
- Die Querwelligkeit ist so gering, dass die Plattenqualität nicht negativ beeinträchtigt wird
- Note: sehr gut

### Coextrusion mit D:

- keine Ablagerungen über eine Versuchsdauer von 5 Stunden
- nach 90 Minuten in unregelmäßigen Abständen auftretende, leichte Querwellen, die die Plattenqualität leicht negativ beeinträchtigen
- Note: sehr gut

### Coextrusion mit E:

- keine Ablagerungen über eine Versuchsdauer von 5 Stunden
- Die Querwelligkeit ist so gering, dass die Plattenqualität nicht negativ beeinträchtigt wird
- Note: sehr gut

### Coextrusion mit F:

- keine Ablagerungen über eine Versuchsdauer von 5 Stunden
- nach 90 Minuten in unregelmäßigen Abständen auftretende, leichte Querwellen, die die Plattenqualität leicht negativ beeinträchtigen
- Note: sehr gut

### Coextrusion mit G:

- keine Ablagerungen über eine Versuchsdauer von 5 Stunden
- Die Querwelligkeit ist so gering, dass die Plattenqualität nicht negativ beeinträchtigt wird
- Note: sehr gut

### Coextrusion mit H (Referenz):

- erste kleinere Stoerungen nach 35 Minuten (Querwellen)
- nach 60 Minuten grosse Stoerungen (Verwerfungen von Stegen)
- Note: schlecht

## Patentansprüche

1. Verwendung einer Zusammensetzung enthaltend ein Polymer ausgewählt aus der Gruppe bestehend aus Polycarbonat, einem transparenten Polycarbonat-Polyester Blend, einem Copolyestercarbonat und einem transparenten Polyester und eine Verbindung der Formel (I) 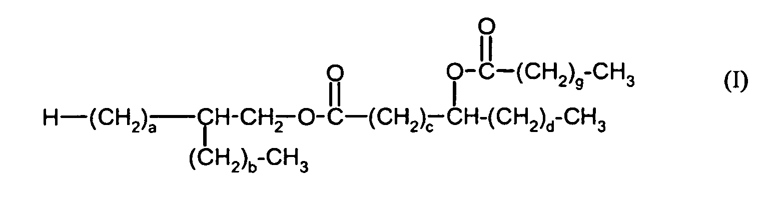 und
eine oder mehrere verschiedene Verbindungen der Formel (II) 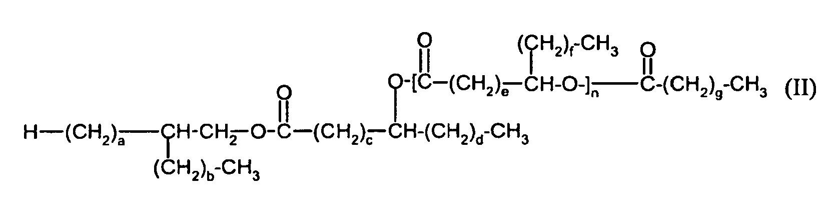 wobei für die Verbindungen nach Formel (I) und für die Verbindungen nach Formel (II) gilt:
a = 1 bis 17,
b = 0 bis 16,
c = 6 bis 14,
d = 3 bis 7,
e = 6 bis 14,
f = 3 bis 7,
g = 5 bis 40 und
a + b = ≥9
und wobei für die Verbindungen nach Formel (II) gilt n = 1 bis 10,
zur Coextrusion.

2. Verwendung nach Anspruch 1, wobei das Verhältnis des Gewichtsanteiles der Verbindung gemäß Formel (I) in der Zusammensetzung zu dem Gewichtsteil aller Verbindungen gemäß Formel (II) in der Zusammensetzung 1:0,001 bis 1:1,2 ist.

3. Verwendung gemäß Anspruch 1, wobei
der Gewichtsteil der Verbindung gemäß Formel (II) mit n = 1 0,5 bis 1,2 mal so groß ist wie der Gewichtsteil der Verbindung gemäß Formel (I) und
der Gewichtsteil der Verbindung gemäß Formel (II) mit n = 2 0,2 bis 1,2 mal so groß ist wie der Gewichtsteil der Verbindung gemäß Formel (I) und
der Gewichtsteil der Verbindung gemäß Formel (II) mit n = 3 0 bis 1 mal so groß ist wie der Gewichtsteil der Verbindung gemäß Formel (I) und
der Gewichtsteil der Verbindung gemäß Formel (II) mit n = 4 0 bis 0,8 mal so groß ist wie der Gewichtsteil der Verbindung gemäß Formel (I) und
der Gewichtsteil der Verbindung gemäß Formel (II) mit n = 5 0 bis 0,5 mal so groß ist wie der Gewichtsteil der Verbindung gemäß Formel (I) und
der Gewichtsteil der Verbindung nach Formel (II) mit n = 6 0 bis 0,4 mal so groß ist wie der Gewichtsteil der Verbindung nach Formel (I).

4. Verwendung nach einem der Ansprüche 1 bis 3, wobei der Gewichtsanteil der Verbindungen nach Formel (I) und der Verbindungen der Formel (II) in Summe 0,02 bis 1,0 Gew.-% ist.

5. Verwendung nach einem der Ansprüche 1 bis 4, wobei die Zusammensetzung zusätzlich 0,1 bis 15 Gew.-Teile UV-Absorber enthält.

6. Verwendung nach einem der Ansprüche 1 bis 5, wobei die Zusammensetzung zusätzlich 10 bis 3000 ppm, bezogen auf die Gesamtmasse der Zusammensetzung, Thermostabilisatoren enthält.

7. Verfahren zur Coextrusion einer Zusammensetzung gemäß einem der Ansprüche 1 - 6 zu einem Erzeugnis.

8. Coextrudiertes Erzeugnis enthaltend die Zusammensetzung gemäß einem der Ansprüche 1 bis 6.

9. Erzeugnis nach Anspruch 8, ausgewählt aus der Gruppe bestehend aus Verscheibungen, Gewächshäuser, Wintergärten, Bushaltestellen, Reklametafeln, Schilder, Schutzscheiben, Automobilverscheibungen, Fenster, Überdachungen, Massivplatten, gewellte Platten, Stegplatten und Stegprofile.

10. Coextrudierte Einschichtige oder mehrschichtige Platte, wobei eine oder mehrere der Schichten der Platte die Zusammensetzung gemäß einem der Ansprüche 1 bis 6 enthält.

11. Erzeugnis erhältlich nach dem Verfahren gemäß Anspruch 7.

## Claims

1. Use of a composition containing a polymer selected from the group consisting of polycarbonate, a transparent polycarbonate-polyester blend, a copolyester carbonate and a transparent polyester, and a compound of formula (I) 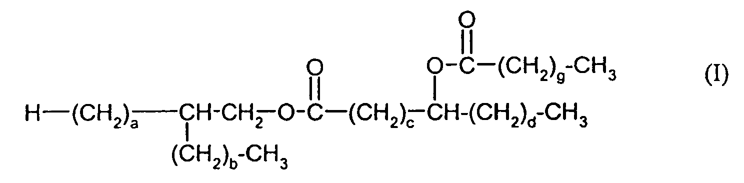 and
one or more different compounds of formula (II) 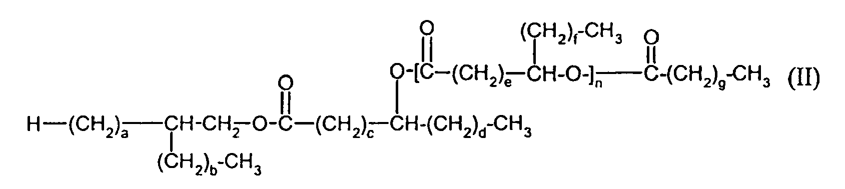 wherein the following applies in respect of the compounds according to formula (I) and in respect of the compounds according to formula (II) :
a = from 1 to 17,
b = from 0 to 16,
c = from 6 to 14,
d = from 3 to 7,
e = from 6 to 14,
f = from 3 to 7,
g = from 5 to 40 and
a + b = ≥ 9
and wherein n = from 1 to 10 in the compounds according to formula (II),
for co-extrusion.

2. Use according to claim 1, wherein the ratio of the amount by weight of the compound according to formula (I) in the composition to the amount by weight of all the compounds according to formula (II) in the composition is from 1:0.001 to 1:1.2.

3. Use according to claim 1, wherein
the amount by weight of the compound according to formula (II) wherein n = 1 is from 0.5 to 1.2 times as great as the amount by weight of the compound according to formula (I), and the amount by weight of the compound according to formula (II) wherein n = 2 is from 0.2 to 1.2 times as great as the amount by weight of the compound according to formula (I), and
the amount by weight of the compound according to formula (II) wherein n = 3 is from 0 to 1 times as great as the amount by weight of the compound according to formula (I), and the amount by weight of the compound according to formula (II) wherein n = 4 is from 0 to 0.8 times as great as the amount by weight of the compound according to formula (I), and
the amount by weight of the compound according to formula (II) wherein n = 5 is from 0 to 0.5 times as great as the amount by weight of the compound according to formula (I), and the amount by weight of the compound according to formula (II) wherein n = 6 is from 0 to 0.4 times as great as the amount by weight of the compound according to formula (I).

4. Use according to any one of claims 1 to 3, wherein the sum of the amounts by weight of the compounds according to formula (I) and of the compounds of formula (II) is from 0.02 to 1.0 wt.%.

5. Use according to any one of claims 1 to 4, wherein the composition additionally contains from 0.1 to 15 parts by weight of UV absorber.

6. Use according to any one of claims 1 to 5, wherein the composition additionally contains from 10 to 3000 ppm, based on the total weight of the composition, thermostabilisers.

7. Process for the co-extrusion of a composition according to any one of claims 1 to 6 to give a product.

8. Co-extruded product containing the composition according to any one of claims 1 to 6.

9. Product according to claim 8, selected from the group consisting of glazing, greenhouses, conservatories, bus stops, advertising hoardings, signs, safety glazing, motor vehicle glazing, windows, roofing, solid sheets, corrugated sheets, multi-wall sheets and multi-wall profiles.

10. Co-extruded single-layer or multi-layer sheet, wherein one or more of the layers of the sheet contains the composition according to any one of claims 1 to 6.

11. Product obtainable by the process according to claim 7.

## Revendications

1. Utilisation d'une composition contenant un polymère choisi dans le groupe consistant en un polycarbonate, un mélange polycarbonate-polyester transparent, un copolyester-carbonate et un polyester transparent, avec un composé de formule (I) 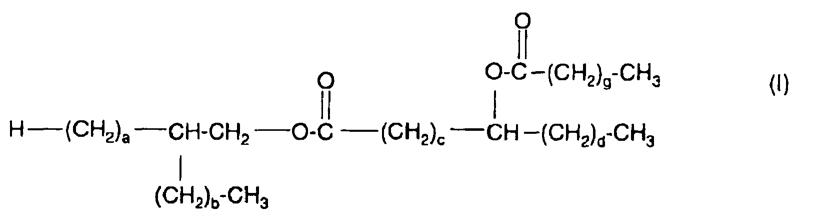 et
un ou plusieurs autres composés, répondant à la formule (II) 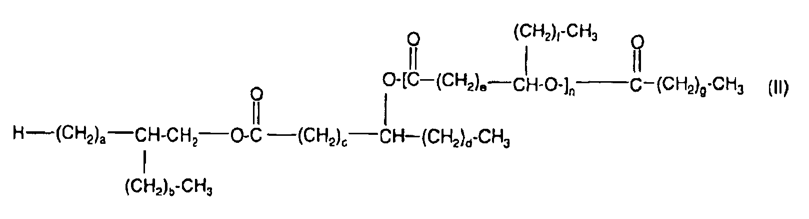 les indices de la formule (I) et de la formule (II) satisfaisant aux conditions suivantes :
a = 1 à 17,
b = 0 à 16,
c = 6 à 14,
d = 3 à 7,
e = 6 à 14,
f = 3 à 7,
g = 5 à 40 et
a + b ≥ 9,
et l'indice n de la formule (II) = 1 à 10,
pour la co-extrusion.

2. Utilisation selon la revendication 1, dans laquelle les proportions relatives en poids entre le composé de formule (I) et les composés de formule (II) dans la composition vont de 1:0,001 à 1:1,2.

3. Utilisation selon la revendication 1, dans laquelle
les proportions en poids du composé de formule (II) dans laquelle n = 1 représentent de 0,5 à 1,2 fois les proportions en poids du composé de formule (I) et
les proportions en poids du composé de formule (II) dans laquelle n = 2 représentent de 0,2 à 1,2 fois les proportions en poids du composé de formule (I) et
les proportions en poids du composé de formule (II) dans laquelle n = 3 représentent de 0 à 1 fois les proportions en poids du composé de formule (I) et
les proportions en poids du composé de formule (II) dans laquelle n = 4 représentent de 0 à 0,8 fois les proportions en poids du composé de formule (I) et
les proportions en poids du composé de formule (II) dans laquelle n = 5 représentent de 0 à 0,5 fois les proportions en poids du composé de formule (I) et
les proportions en poids du composé de formule (II) dans laquelle n = 6 représentent de 0 à 0,4 fois les proportions en poids du composé de formule (I).

4. Utilisation selon l'une des revendications 1 à 3, dans laquelle les proportions en poids des composés de formule (I) et des composés de formule (II) représentent au total de 0,02 à 1,0 % en poids.

5. Utilisation selon l'une des revendications 1 à 4, dans laquelle la composition contient en outre 0,1 à 15 parties en poids d'absorbeurs d'UV.

6. Utilisation selon l'une des revendications 1 à 5, dans laquelle la composition contient en outre de 10 à 3000 ppm, sur son poids total, de thermostabilisants.

7. Procédé pour la co-extrusion d'une composition selon l'une des revendications 1 à 6 en un produit.

8. Produit co-extrudé contenant la composition selon l'une des revendications 1 à 6.

9. Produit selon la revendication 8 choisi dans le groupe consistant en les vitrages, les serres, les jardins d'hiver, les haltes d'autobus, les panneaux de publicité, les enseignes, les vitrages de protection, les vitrages d'automobile, les fenêtres, les toitures, les plaques massives, les plaques ondulées, les plaques nervurées et les profilés nervurés.

10. Plaque co-extrudée à une ou plusieurs couches, une ou plusieurs des couches de la plaque contenant la composition selon l'une des revendications 1 à 6.

11. Produit obtenu par le procédé selon la revendication 7.
